# EUROPÄISCHE PATENTANMELDUNG

(11) **EP 4 155 839 A1**
(43) Veröffentlichungstag der Anmeldung: **29.03.2023**
(21) Anmeldenummer: 22201119.9
(22) Anmeldetag: 14.06.2013
(51) Int. Cl.: G05B 11/06, A01D 41/127

(54) **LANDWIRTSCHAFTLICHE ARBEITSMASCHINE MIT ZUMINDEST EINER STEUERUNGSEINRICHTUNG**

(30) Priorität: 16.07.2012 DE 102012106390; 13.06.2013 DE 102013106128
(62) Teilanmeldung aus: 13171940.3
(71) Anmelder: CLAAS Selbstfahrende Erntemaschinen GmbH, 33428 Harsewinkel (DE)
(72) Erfinder: Wilken, Andreas, 49143 Bissendorf (DE); Neu, Sebastian, 49196 Bad Laer (DE); Heitmann, Christoph, 48231 Warendorf (DE); Baumgarten, Joachim, 48361 Beelen (DE); Bussmann, Christoph, 33428 Harsewinkel (DE); Vöcking, Henner, 33397 Rietberg (DE); Kettelhoit, Boris, 33335 Gütersloh (DE)
(74) Vertreter: CLAAS Gruppe

(57) **Zusammenfassung**

Die vorliegende Erfindung betrifft eine landwirtschaftliche Arbeitsmaschine (1) mit zumindest einer Steuer- und Regeleinrichtung (23), die mittels hinterlegter Kennlinienfelder (48) zu einer automatisierbaren Einstellung und Überwachung von Arbeits- und/oder Qualitätsparametern (37, 40) der landwirtschaftlichen Arbeitsmaschine (1) eingerichtet ist, die einen Ernteprozess beeinflussen, sowie mindestens einer Anzeigeeinrichtung (22) zur Darstellung von Sollwerten und Istwerten der Arbeits- und/oder Qualitätsparameter (37, 40), und wobei das hinterlegte Kennlinienfeld (48) von Kennlinien (49) gebildet wird und die Kennlinien (49) in Abhängigkeit von Einflussgrößen (50) verschiedene Bewertungsgrößen (51) der landwirtschaftlichen Arbeitsmaschine (1) beschreiben, wobei die Bewertungsgrößen (51) von Qualitätsparametern (40) und die Einflussgrößen (50) von Arbeitsparametern (37) gebildet werden und das Kennlinienfeld (48) in einem aktiven Arbeitsbereich (53) liegende Betriebspunkte (52) und in den Randbereichen und/oder außerhalb des aktiven Arbeitsbereiches (53) liegende Messpunkte (54) umfasst, wobei die Steuer- und Regeleinrichtung (23) im Ernteprozess die Betriebspunkte (52) ermittelt und in das jeweilige Kennlinienfeld (48) übernimmt, wobei der die Betriebspunkte (52) umfassende Bereich des jeweiligen Kennlinienfeldes (48) den aktiven Arbeitsbereich (53) des Kennlinienfeldes (48) bildet und die Steuer- und Regeleinrichtung (23) weiter eingerichtet ist, definiert Messpunkte (54) in den hinterlegten Kennlinienfeldern (48) anzusteuern, wobei diese gezielt angesteuerten Messpunkte (54) in den Randbereichen des Kennlinienfeldes (48) und/oder außerhalb des aktiven Arbeitsbereiches (52, 53) des jeweiligen Kennlinienfeldes (48) liegen.

## Beschreibung

Die vorliegende Erfindung betrifft eine landwirtschaftliche Arbeitsmaschine mit zumindest einer Steuer- und Regeleinrichtung gemäß dem Oberbegriff des Anspruches 1.

Aus dem Stand der Technik ist es bekannt Arbeits- und Qualitätsparameter einer landwirtschaftlichen Arbeitsmaschine mittels einer Steuer- und Regeleinrichtung zu überwachen und zu optimieren. Die DE 10 2006 044 628 schlägt hierfür ein Verfahren vor, bei dem stets eine bestimmte Anzahl von Parametern in Abhängigkeit voneinander optimiert werden. Diese punktuelle Regelung von Maschinenparametern wird unter anderem in der DE 10 2009 009 767 dahingehend weiterentwickelt, dass ereignisabhängig eine Optimierung einstellbarer Maschinenparameter vorgenommen wird, wobei der Bediener der landwirtschaftlichen Arbeitsmaschine mittels einer Anzeigeeinheit stets über die ablaufenden Optimierungsvorgänge informiert gehalten wird. Den bekannten Optimierungsmethoden haftet der Nachteil an, dass die Qualität der in den Steuer- und Regeleinrichtungen hinterlegten Kennlinien von den tatsächlich durchlaufenen Betriebspunkten abhängen. Ändern sich hier Maschinen- und Erntegutparameter schlagartig muss die Steuer- und Regeleinrichtung in einem anderen Bereich der hinterlegten Kennlinienfelder agieren, was dazu führen kann, dass diese Kennlinienbereiche zunächst an die neuen Randbedingungen, etwa die Ernteguteigenschaften, angepasst werden müssen. Dies führt dazu, dass derartige Regelungssystem bei sich abrupt ändernden Bedingungen eine gewisse Einschwingzeit benötigen, bevor sie wieder optimal agieren.

Aufgabe der vorliegenden Erfindung ist es daher, die Steuer- und Regeleinrichtung einer landwirtschaftlichen Arbeitsmaschine derart weiterzuentwickeln, dass eine qualitativ hochwertige Regelung der landwirtschaftlichen Arbeitsmaschine möglich wird und einem Bediener der jeweils aktive Betriebsmodus der Steuerungseinrichtung signalisiert wird.

Diese Aufgabe wird erfindungsgemäß durch die kennzeichnenden Merkmale des unabhängigen Anspruches 1 gelöst.

Indem die landwirtschaftliche Arbeitsmaschine mit zumindest einer Steuer- und Regeleinrichtung, die mittels hinterlegter Kennlinienfelder zu einer automatisierbaren Einstellung und Überwachung von Arbeits- und/oder Qualitätsparametern der Erntemaschine eingerichtet ist, die einen Ernteprozess beeinflussen, sowie mindestens einer Anzeigeeinrichtung zur Darstellung von Sollwerten und Istwerten der Arbeits- und/oder Qualitätsparameter ausgerüstet ist und wobei das hinterlegte Kennlinienfeld von Kennlinien gebildet wird und die Kennlinien in Abhängigkeit von Einflussgrößen verschiedene Bewertungsgrößen der landwirtschaftlichen Arbeitsmaschine beschreiben, wobei die Bewertungsgrößen von Qualitätsparametern und die Einflussgrößen von Arbeitsparametern gebildet werden und das Kennlinienfeld in einem aktiven Arbeitsbereich liegende Betriebspunkte und in den Randbereichen und/oder außerhalb des aktiven Arbeitsbereiches liegende Messpunkte umfasst, wobei die Steuer- und Regeleinrichtung im Ernteprozess die Betriebspunkte ermittelt und in das jeweilige Kennlinienfeld übernimmt, wobei der die Betriebspunkte umfassende Bereich des jeweiligen Kennlinienfeldes den aktiven Arbeitsbereich des Kennlinienfeldes bildet und die Steuer- und Regeleinrichtung weiter eingerichtet ist, definiert Messpunkte in den hinterlegten Kennlinienfeldern anzusteuern, wobei diese gezielt angesteuerten Messpunkte (54) in den Randbereichen des Kennlinienfeldes (48) und/oder außerhalb des aktiven Arbeitsbereiches (52, 53) des jeweiligen Kennlinienfeldes (48) liegen , wird sichergestellt, dass eine qualitativ hochwertige Regelung der landwirtschaftlichen Arbeitsmaschine möglich wird. Dies hat insbesondere den Effekt, dass das hinterlegte Kennlinienfeld in dem gesamt hinterlegten Wertebereich ein gutes Arbeitsergebnis der landwirtschaftlichen Arbeitsmaschine, auch bei stark schwankenden Arbeitsbedingungen, ermöglicht.

Damit der Bediener der landwirtschaftlichen Arbeitsmaschine zudem über den jeweils aktiven Betriebsmodus der Steuer- und Regeleinrichtung unterrichtet ist, ist zudem vorgesehen, dass bei einer Aktivierung der gezielten Ansteuerung eines definierten Messpunktes an die Stelle der Anzeige des Sollwertes und/oder Istwertes des jeweiligen Arbeits- und/oder Qualitätsparameters zumindest ein die automatisierte Einstellung und Überwachung dieses Arbeits- und/oder Qualitätsparameters visualisierendes charakteristisches Symbol tritt.

Damit der von der Steuer- und Regeleinrichtung zu bewältigende Rechen- und Regelungsaufwand bei dennoch gutem Regelungsergebnis akzeptabel bleibt, ist in einer vorteilhaften Ausgestaltung der Erfindung vorgesehen, dass die Anzahl der gezielt ansteuerbaren Messpunkte je Kennlinienfeld beschränkt ist und vorzugsweise vier beträgt. Dieser Effekt einer effizienten Parameterregelung wird auch dadurch noch unterstützt, wenn gemäß einer weiteren vorteilhaften Ausgestaltung der Erfindung die ansteuerbaren Messpunkte in einem definierten Zeitintervall wiederholt angesteuert werden, wobei die Dauer des Zeitintervalls mit zunehmender Einsatzzeit der landwirtschaftlichen Arbeitsmaschine zunimmt und vorzugsweise zu Beginn der Einsatzzeit kleiner als 15 Minuten ist und sich mit zunehmender Einsatzzeit auf 30 Minuten erhöht.

Der Bediener der landwirtschaftlichen Arbeitsmaschine ist dann gut über die maschinenintern ablaufende gezielte Ansteuerung von gegenwärtig nicht im Arbeitsfeld liegenden Messpunkten unterrichtet, wenn in einer vorteilhaften Ausgestaltung der Erfindung das charakteristische Symbol die Anzeige des Arbeits- und/oder Qualitätsparameters zumindest partiell überblendet und der jeweils zumindest partiell überblendete Arbeits- und/oder Qualitätsparameter passiv, vorzugsweise verblassend, visualisiert wird.

In einer vorteilhaften Weiterbildung der Erfindung ist zudem vorgesehen, dass bei Übersteuerung der automatisierten Ansteuerung eines Messpunktes durch einen Bediener das charakteristische Symbol ausgeblendet wird. In diesem Zusammenhang ist außerdem vorgesehen, dass bei inaktiver automatisierter Einstellung und Überwachung von Parametern ein darauf gerichteter Hinweis auf der Anzeigeeinrichtung einblendbar ist, sodass der Bediener stets informiert ist, dass zur Zeit nicht alle verfügbaren Einstelloptimierungsressourcen genutzt werden.

Eine komplexe Optimierung der landwirtschaftlichen Arbeitsmaschine wird in vorteilhafter Weiterbildung der Erfindung dann erreicht, wenn die Arbeitsparameter Maschinenparametereinstellungen und Erntegutparameter und die Qualitätsparameter die Parameter "Abscheideverlust", "Reinigungsverlust", "Überkehr", "Überkehrvolumen" und "Kornanteil in der Überkehr" umfassen.

Einen schnellen Überblick über den Aktivierungszustand der verfügbaren Einstellautomaten erhält der Bediener der landwirtschaftlichen Arbeitsmaschine zudem dann, wenn zumindest die die Qualitätskriterien beschreibenden Kennlinienfelder in Einstellautomaten hinterlegt sind und wobei jeder Einstellautomat in der Anzeigeeinheit mittels Piktogramm visualisiert ist und die Aktivierung eines Einstellautomaten durch Hervorhebung des jeweiligen Piktogramms und die Deaktivierung des jeweiligen Einstellautomaten durch Abblendung des jeweiligen Piktogramms visualisiert wird.

Damit stets sichergestellt ist, dass die landwirtschaftliche Arbeitsmaschine die verfügbaren Einstellressourcen optimal nutzt, kann zudem vorgesehen sein, dass die Steuer- und Regeleinrichtung automatisch mit der Inbetriebnahme der Arbeitsmaschine aktiviert wird.

Weitere vorteilhafte Ausgestaltungen der Erfindungen sind den Unteransprüchen zu entnehmen und werden nachfolgend anhand von in Zeichnungen dargestellten Ausführungsbeispielen näher erläutert.

Es zeigen:
- Fig. 1: eine schematische Darstellung einer als Mähdrescher ausgeführten landwirtschaftlichen Arbeitsmaschine;
- Fig. 2: eine schematische Darstellung einer Anzeigestruktur einer Steuer- und Regelungseinrichtung;
- Fig. 3a - 3d: schematische Darstellungen der Anzeigestruktur der Steuer- und Regelungseinrichtung in unterschiedlichen Betriebssituationen;

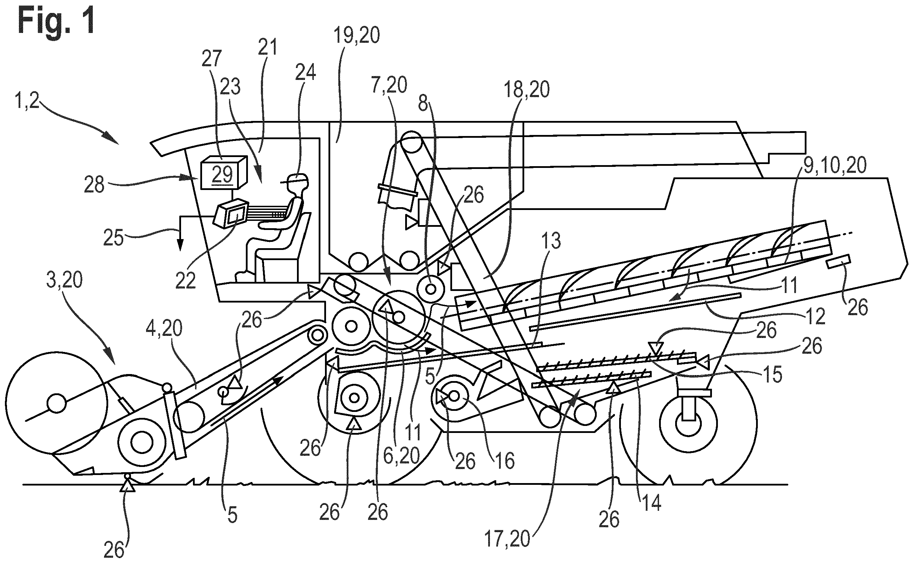

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Trennrotor 9 ausgeführte Trenneinrichtung 10 übergeben wird. In dem rotierenden Trennrotor 9 wird der Gutstrom 5 so gefördert, dass in dem Gutstrom 5 enthaltene freibewegliche Körner 11 im untenseitigen Bereich des Trennrotors 9 abgeschieden werden. Es liegt im Rahmen der Erfindung, dass die im dargestellten Ausführungsbeispiel als Trennrotor 9 ausgeführte Trenneinrichtung 10 auch als an sich bekannter und daher nicht dargestellter Hordenschüttler ausgeführt sein kann. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder vom Bediener 24 der landwirtschaftlichen Arbeitsmaschine 1 initiiert eine Vielzahl von an sich bekannten und daher nicht näher erläuterten Prozessen gesteuert werden können. Die Steuer- und Regeleinrichtung 23 kommuniziert über ein sogenanntes Bussystem 25 in an sich bekannter Weise mit einer Vielzahl von Sensorsystemen 26. Einzelheiten bezüglich der Struktur der Sensorsysteme 26 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 26 nicht nochmals beschrieben wird. Zudem ist die Steuer- und Regeleinrichtung 23 mit einem eine Anzeigeeinheit 27 umfassenden Fahrerassistenzsystem 28 gekoppelt. Es liegt im Rahmen der Erfindung, dass das Fahrerassistenzsystem 28 auch unmittelbar in die Steuer- und Regeleinrichtung 23 integriert sein kann und die Visualisierung der von dem Fahrerassistenzsystem 28 bereitgestellten und nachfolgend noch näher erläuterten Informationen 29 auch unmittelbar in dem der Steuer- und Regeleinrichtung 23 zugeordneten Anzeigeeinheit 22 erfolgt.

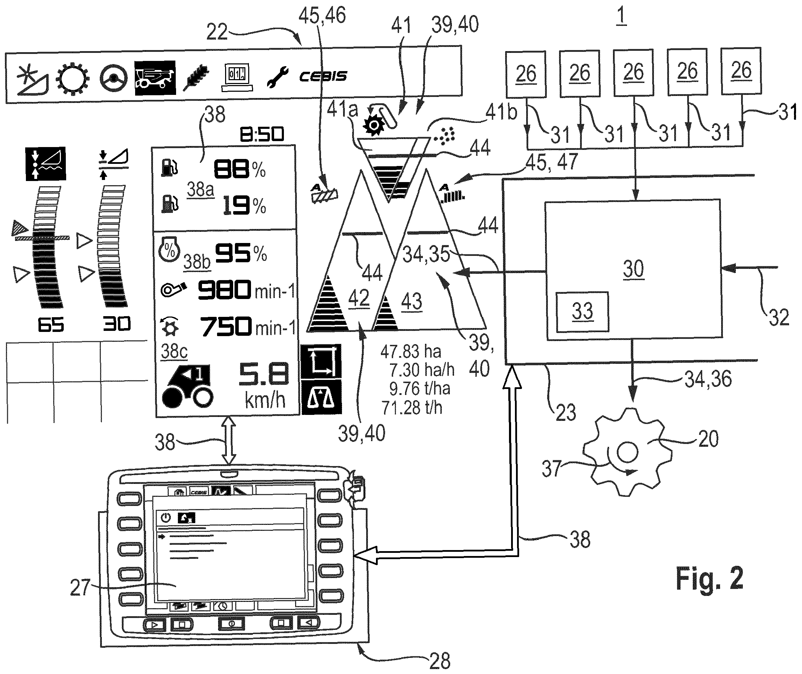

Fig. 2 zeigt eine schematische Darstellung der Anzeigeeinheit 22 der Steuer- und Regeleinrichtung 23 sowie die der Steuer- und Regeleinrichtung 23 zugeordnete und mit der Anzeigeeinheit 22 gekoppelte Recheneinheit 30. Die Recheneinheit 30 ist so beschaffen, dass sie neben den von den Sensorsystemen 26 generierten internen Informationen 31, externe Informationen 32 und in der Recheneinheit 30 selbst hinterlegte Informationen 33, wie etwa Expertenwissen, zu einer Vielzahl von Ausgangssignalen 34 verarbeiten kann. Die Ausgangssignale 34 sind dabei so beschaffen, dass sie zumindest Anzeigesteuersignale 35 und Arbeitsorgansteuersignale 36 umfassen, wobei erstere die Inhalte der Anzeigeeinheit 22 bestimmen und letztere die Änderung der unterschiedlichsten Arbeitsparameter 37 der Arbeitsorgane 20 der landwirtschaftlichen Arbeitsmaschine 1 bewirken, wobei Pfeil 37 symbolisch für die Dreschtrommeldrehzahl steht. Zudem ist die Steuer- und Regeleinrichtung 23, wie bereits beschrieben, mit einem Fahrerassistenzsystem 28 gekoppelt, wobei das Fahrerassistenzsystem 28 so in die landwirtschaftliche Arbeitsmaschine 1 integriert ist, dass es Daten 38 in noch näher zu beschreibender Weise sowohl mit der Steuer- und Regeleinrichtung 23 als auch mit der dieser zugeordneten Anzeigeeinheit 22 austauschen kann. Die in Figur 2 dargestellten Inhalte der Anzeigeeinheiten 22, 27 sind beispielhaft und werden nachfolgend näher beschrieben. Die der Steuer- und Regeleinrichtung 23 zugeordnete Anzeigeeinheit 22 umfasst in ihrem zentralen Bereich ein vom Bediener 24 frei definierbares sogenanntes Hotkey-Fenster 38 in welchem wichtige Maschineninformationen, wie etwa der Füllstand des Kraftstofftanks 38a, Maschinenparametereinstellungen 38b und die Fahrgeschwindigkeit 38c visualisiert sind.

Erfindungsgemäß umfasst die Anzeigeeinheit 22 in ihrem rechtsseitigen Bereich Anzeigeelemente 39 zur Visualisierung aktueller Werte bestimmter Qualitätsparameter 40 der landwirtschaftlichen Arbeitsmaschine 1. Im dargestellten Ausführungsbeispiel visualisiert das obenseitig angeordnete Anzeigeelement 39 die Zusammensetzung der sogenannten "Überkehr" 41, wobei die linkseitige Darstellung das "Überkehrvolumen" 41a und die rechtsseitige Darstellung den "Kornanteil in der Überkehr" 41b visualisiert. Das untere, linke Anzeigeelement 39 visualisiert die sogenannten "Abscheideverluste" 42, d.h. diejenigen Kornverluste, die von der als Trennrotor 9 oder Hordenschüttler ausgeführten Trenneinrichtung 10 im rückwärtigen Bereich der landwirtschaftlichen Arbeitsmaschine 1 aus dieser ausgetragen und nicht in den Korntank 19 gefördert werden. Das untere, rechte Anzeigeelement 39 visualisiert die sogenannten "Reinigungsverluste" 43, wobei hier diejenigen Kornverluste angezeigt werden, die von der Reinigungseinrichtung 17 in analoger Weise zur Trenneinrichtung 10 aus der landwirtschaftlichen Arbeitsmaschine 1 ausgetragen und nicht in den Korntank 19 gefördert werden. Jedes der Anzeigeelemente 39 umfasst zudem einen als waagerechten Strich ausgeführten Sollwertanzeiger 44, der das maximal zulässige und vom Bediener 24 zuvor definierte Verlustniveau des jeweiligen Qualitätsparameters 40 definiert, sodass der Bediener 24 schnell erfassen kann, ob die landwirtschaftliche Arbeitsmaschine 1 eine hinreichende Arbeitsqualität aufweist.

Aufgrund der komplexen Zusammenhänge zwischen verschiedensten Maschinenparametern 38a-c und zumindest den Qualitätsparametern 40 sind die Einstelloptionen für die Trenneinrichtung 10 und die Reinigungseinrichtung 17 in sogenannten Einstellautomaten 45 hinterlegt. Im dargestellten Ausführungsbeispiel sind gemäß Figur 2 ein Abscheideautomat 46 für die Optimierung der Arbeitsweise der Trenneinrichtung 10 und ein Reinigungsautomat 47 für die Optimierung der Arbeitsweise der Reinigungseinrichtung 17 programmiert und in der Steuerund Auswerteinrichtung 23 hinterlegt. Es liegt im Rahmen der Erfindung, dass jeder der verfügbaren Einstellautomaten 45 auch ganz oder teilweise in dem Fahrerassistenzsystem 28 hinterlegt sein kann.

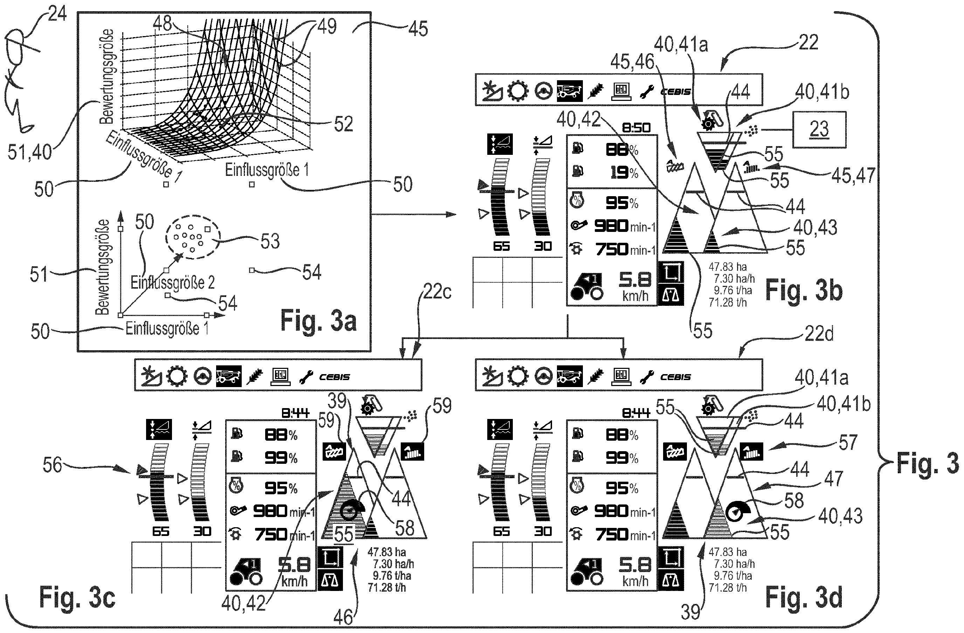

Fig. 3 beschreibt nun die Erfindung anhand schematischer Abbildungen der der Steuer- und Regeleinrichtung 23 zugeordneten Anzeigeeinheit 22 sowie der verfügbaren Einstellautomaten 45 näher. Fig. 3a zeigt zum besseren Verständnis der Wirkungsweise der verfügbaren Einstellautomaten 45 eine schematische Struktur derselben. Sowohl der Abscheideautomat 46 als auch der Reinigungsautomat 47, wie im Übrigen jeder für die Einstellung von Arbeitsorganen 20 der landwirtschaftlichen Arbeitsmaschine 1 vorgesehene Einstellautomat 45, werden durch Kennlinienfelder 48 definiert. Die ein Kennlinienfeld 48 bildenden Kennlinien 49 beschreiben in Abhängigkeit von Einflussgrößen 50 verschiedene Bewertungsgrößen 51 der landwirtschaftlichen Arbeitsmaschine 1. Im vorliegenden Fall bildet die Bewertungsgröße 51 die zuvor beschriebenen Qualitätsparameter 40. Die Einflussgrößen 50 umfassen im dargestellten Ausführungsbeispiel zumindest die Drehzahl einer als Trennrotor 9 ausgeführten Trenneinrichtung 10 sowie die Drehzahl des der Reinigungseinrichtung 17 zugeordneten Gebläses 16 und die Öffnungsweite der Siebebenen 14, 15. Während des Arbeitseinsatzes der landwirtschaftlichen Arbeitsmaschine 1, hier der Ernteeinsatz des Mähdreschers 2, werden die ermittelten Betriebspunkte 52 unmittelbar in das Kennlinienfeld 48 übernommen. Gemäß der unteren Darstellung in Fig. 3a arbeitet die landwirtschaftliche Arbeitsmaschine 1 häufig nur in einem kleinen Bereich 53 des jeweils hinterlegten Kennlinienfeldes 48. Damit das in der Steuer- und Regeleinrichtung 23 hinterlegte Kennlinienfeld 48 den jeweils zu modellierenden Abscheideoder Reinigungsprozess im gesamten vordefinierten Wertebereich gut wiedergibt werden in regelmäßigen Abständen Messpunkte 54 angefahren, die nicht in dem gegenwärtig durchlaufenen Bereich 53 des jeweiligen Kennlinienfeldes 48 und/oder in seinen Grenzbereichen liegen. Dies hat den Effekt, dass die in den Einstellautomaten 45 hinterlegten Abscheide- oder Reinigungsmodelle auch im Grenzbereich der Kennlinienfelder 48 und in zurzeit nicht durchlaufenen Bereichen des jeweiligen Kennlinienfeldes 48 den jeweiligen Prozess hinreichend genau abbilden.

Wird die landwirtschaftliche Arbeitsmaschine 1, im hier dargestellten Ausführungsbeispiel der Mähdrescher 2, mit aktiviertem Abscheideautomat 46 und aktiviertem Reinigungsautomat 47 betrieben, hat die der Steuer- und Regeleinrichtung 23 zugeordnete Anzeigeeinheit 22 die in Fig. 3b gezeigte und zuvor beschriebene Struktur. Der Wert jedes Qualitätsparameters 40, hier das "Überkehrvolumen" 41a, der "Kornanteil in der Überkehr" 41b, der "Abscheideverlust" 42 und, der "Reinigungsverlust" 43, wird qualitativ in Form farblich hervorgehobener Flächen 55 visualisiert. Jede der Flächen 55 ändert ihre Ausdehnung in Abhängigkeit von den durch die Steuer- und Regeleinrichtung 23 ermittelten Werten für "Abscheideverlust" 42, "Kornverlust" 43 und "Überkehrzusammensetzung" 41a, 41b, wobei es Aufgabe der Einstellautomaten 45 ist, die Qualitätskriterien 40 in einem Optimum und unterhalb des jeweiligen Sollwertanzeigers 44 zu halten.

Muss nun ein definierter Messpunkt 54 durch die Einstellautomaten 45 angefahren werden, ergeben sich für das hier beschriebene Ausführungsbeispiel gemäß den Figuren 3c und 3d zwei Aktivierungszustände 56, 57. In dem einen Aktivierungszustand 56, Fig. 3c, fährt der Abscheideautomat 46 automatisch einen Messpunkt 54 an, der entweder außerhalb des gerade durchlaufenen Bereichs 53 oder im Grenzbereich des die Kornabscheidung an der Trenneinrichtung 10 beschreibenden Kennlinienfeldes 48 liegt. Damit der Bediener 24 der landwirtschaftlichen Arbeitsmaschine 1 darüber informiert ist, dass der Abscheideautomat 46 einen nicht im gegenwärtigen Arbeitsbereich 53 liegenden Messpunkt 54 anfährt, wird in der Anzeigeeinheit 22c die den Qualitätsparameter 40 "Abscheideverlust" 42 visualisierende Fläche 55 verblassend dargestellt. Zudem kann vorgesehen sein, dass die verblassend dargestellt Fläche 55 in ihrer Größe entweder eingefroren wird oder weiterhin die Änderung der "Abscheideverluste" 42 visualisiert. Letztere Variante hält den Bediener 24 über den Verlauf die Änderung informiert, was vor Erreichen eines eingeschwungenen Zustandes auch dazu führen kann, dass die "Abscheideverluste" 42 auch kurzzeitig die Marke des Sollwertanzeigers 44 überschreiten. Um die Optimierung eines nicht im gegenwärtigen Arbeitsbereich 53 liegenden Messpunktes 54 gut erkennbar für den Bediener 24 zu signalisieren ist erfindungsgemäß vorgesehen, dass das den "Abscheideverlust" 42 visualisierende Anzeigeelement 39 durch ein charakteristisches Symbol 58 zumindest partiell überblendet wird, während der partiell überblendete Arbeits- und/oder Qualitätsparameter 37, 40 passiv, vorzugsweise verblassend, dargestellt wird.

In analoger Weise kann die Struktur der Anzeigeeinheit 22 in dem weiteren Aktivierungszustand 57 gemäß Fig. 3d angepasst werden. In diesem Fall fährt der Reinigungsautomat 47 automatisch einen Messpunkt 54 an, der entweder außerhalb des gerade durchlaufenen Bereichs 53 oder im Grenzbereich des die Kornabscheidung an der Reinigungseinrichtung 17 beschreibenden Kennlinienfeldes 48 liegt. Damit der Bediener 24 der landwirtschaftlichen Arbeitsmaschine 1 darüber informiert ist, dass der Reinigungsautomat 47 einen nicht im gegenwärtigen Arbeitsbereich 53 liegenden Messpunkt 54 anfährt, werden in der Anzeigeeinheit 22d die die Qualitätsparameter 40 "Reinigungsverlust" 43, "Überkehrvolumen" 41a, "Kornanteil in der Überkehr" 41b, visualisierenden Flächen 55 verblassend dargestellt. Zudem kann vorgesehen sein, dass die verblassend dargestellten Flächen 55 in ihrer Größe entweder eingefroren werden oder weiterhin die Änderung der "Reinigungsverluste" 43, des "Überkehrvolumens" 41a und des "Kornanteils in der Überkehr" 41b visualisieren. Letztere Variante hält den Bediener 24 über den Verlauf die Änderungen informiert, was vor Erreichen eines eingeschwungenen Zustandes ebenfalls dazu führen kann, dass die "Reinigungsverluste" 43, das "Überkehrvolumen" 41a und der "Kornanteil in der Überkehr" 41b kurzzeitig die Marke der jeweiligen Sollwertanzeiger 44 überschreiten. Um die Optimierung eines nicht im gegenwärtigen Arbeitsbereich 53 liegenden Messpunktes 54 gut erkennbar für den Bediener 24 zu signalisieren ist auch hier erfindungsgemäß vorgesehen, dass zumindest das den "Reinigungsverlust" 43 visualisierende Anzeigeelement 39 durch ein charakteristisches Symbol 58 zumindest partiell überblendet wird, während der partiell überblendete Arbeits- und/oder Qualitätsparameter 37, 40 passiv, vorzugsweise verblassend, dargestellt wird.

In an sich bekannter Weise kann jeder der vorhandenen Einstellautomaten 45 voneinander unabhängig automatisch oder vom Bediener 24 ausgelöst aktiviert und deaktiviert werden, sodass die Anzahl der gleichzeitig arbeitenden Einstellautomaten 45 beliebig wählbar ist. Vorzugsweise sind stets alle Einstellautomaten 45 zur Optimierung der Arbeitsweise der landwirtschaftlichen Arbeitsmaschine 1 aktiviert. Es liegt im Rahmen der Erfindung, dass eine gezielte Abschaltung eines Einstellautomaten 45 auch dadurch bewirkt werden kann, dass der Bediener 24 gezielt einen Arbeitsparameter 37 durch Eingabe eines definierten Wertes ändert. Findet die Übersteuerung durch den Bediener 24 während des gezielten Anfahrens von Messpunkten 54 statt, werden die charakteristischen Symbole 58 ausgeblendet und die gegebenenfalls verblassende Darstellung der Arbeits- und/oder Qualitätsparameter 37, 40 aufgehoben. In diesem Zusammenhang kann zudem vorgesehen sein, dass der Bediener 24 in der Anzeigeeinheit 22 einen expliziten Hinweis auf die Deaktivierung von Einstellautomaten 45 erhält.

Da die Steuer- und Regeleinrichtung 23 in an sich bekannter Weise so beschaffen ist, dass sie stets die Änderung der Qualitätsparameter 40 visualisiert, unabhängig davon, ob Einstellautomaten 45 aktiviert sind oder nicht kann in einer weiteren Ausgestaltung der Erfindung vorgesehen sein, dass in der Anzeigeeinheit 22 die Einstellautomaten 45 repräsentierende Piktogramme 59 positioniert sind, die bei aktivem Einstellautomat 45 zumindest farblich hervorgehoben visualisiert werden. Die Deaktivierung des jeweiligen Einstellautomaten 45 wird entsprechend durch Abblendung des jeweiligen Piktogramms 59 visualisiert.

Weiter liegt es im Rahmen der Erfindung, dass jeder Einstellautomat 45 über sein eigenes Kennlinienfeld 48 verfügt, wobei einzelne Einstellautomaten 45, auch unter Einbeziehung einer Vielzahl von Kennlinienfeldern 48 eine Optimierung der Arbeitsweise der landwirtschaftlichen Arbeitsmaschine 1 bewirken können. Im dargestellten Ausführungsbeispiel berücksichtigt der Reinigungsautomat 47 Kennlinienfelder 48, die sowohl die "Reinigunsgverluste" 43 als auch das "Überkehrvolumen" 41a und den "Kornanteil in der Überkehr" 41b berücksichtigen. Damit die berücksichtigten Kennlinienfelder 48 auch bei schwankenden Einflussgrößen 50 brauchbare Werte für die Bewertungsgrößen 51 und damit für eine optimale Arbeitsweise der landwirtschaftlichen Arbeitsmaschine 1 liefern, ist vorgesehen, dass das Anfahren nicht im gegenwärtigen Arbeitsbereich 53 oder in den Grenzbereichen der Kennlinienfelder 48 liegender Messpunkte 54 in definierten zeitlichen Abständen und auf eine bestimmte Anzahl von Messpunkten 54 beschränkt erfolgt. Vorzugsweise ist die Anzahl der gezielt ansteuerbaren Messpunkte 54 auf vier beschränkt. Die definierten Zeitintervalle, innerhalb derer die verschiedenen Messpunkte 54 wiederholt angesteuert werden, sind so beschaffen, dass die Dauer des Zeitintervalls mit zunehmender Einsatzzeit der landwirtschaftlichen Arbeitsmaschine 1 zunimmt und vorzugsweise zu Beginn der Einsatzzeit kleiner als 15 Minuten ist und sich mit zunehmender Einsatzzeit auf 30 Minuten erhöht.

Zudem kann vorgesehen sein, dass die Steuer- und Regeleinrichtung 23 und damit auch die Einstellautomaten 45 automatisch mit Inbetriebnahme der landwirtschaftlichen Arbeitsmaschine 1 aktiviert werden. In diesem Zusammenhang kann zudem vorgesehen sein, dass bei inaktiven Einstellautomaten 45 ein Hinweis auf eine Effizienzsteigerung durch Aktivierung des jeweiligen Einstellautomaten 45 an den Bediener 24 generierbar ist.

**Bezugszeichenliste:**

| | | | |
|---|---|---|---|
| 1 | landwirtschaftliche Arbeitsmaschine | 31 | interne Information |
| 2 | Mähdrescher | 32 | externe Information |
| 3 | Getreideschneidwerk | 33 | Information |
| 4 | Schrägförderer | 34 | Ausgangssignal |
| 5 | Erntegutstrom | 35 | Anzeigesignal |
| 6 | Dreschkorb | 36 | Arbeitsorgansignal |
| 7 | Dreschorgan | 37 | Arbeitsparameter |
| 8 | Umlenktrommel | 38 | Hotkey-Fenster |
| 9 | Trennrotor | 39 | Anzeigeelement |
| 10 | Trenneinrichtung | 40 | Qualitätsparameter |
| 11 | Körner | 41 | Überkehr |
| 12 | Rücklaufboden | 41a | Überkehrvolumen |
| 13 | Zuführboden | 41b | Kornanteil in der Überkehr |
| 14 | Siebebene | 42 | Abscheideverlust |
| 15 | Siebebene | 43 | Reinigungsverlust |
| 16 | Gebläse | 44 | Sollwertanzeiger |
| 17 | Reinigungseinrichtung | 45 | Einstellautomat |
| 18 | Elevator | 46 | Abscheideautomat |
| 19 | Korntank | 47 | Reinigungsautomat |
| 20 | Arbeitsorgan | 48 | Kennlinienfeld |
| 21 | Fahrzeugkabine | 49 | Kennlinie |
| 22 | Anzeigeeinheit | 50 | Einflussgröße |
| 23 | Steuer- und Regeleinrichtung | 51 | Bewertungsgröße |
| 24 | Bediener | 52 | Betriebspunkt |
| 25 | Bussystem | 53 | Bereich |
| 26 | Sensorsystem | 54 | Messpunkt |
| 27 | Anzeigeeinheit | 55 | Fläche |
| 28 | Fahrerassistenzsystem | 56 | Regelzustand |
| 29 | Informationen | 57 | Regelzustand |
| 30 | Recheneinheit | 58 | charakteristisches Symbol |
| | | 59 | Piktogramm |

## Patentansprüche

1. Landwirtschaftliche Arbeitsmaschine (1) mit zumindest einer Steuer- und Regeleinrichtung (23), die mittels hinterlegter Kennlinienfelder (48) zu einer automatisierbaren Einstellung und Überwachung von Arbeits- und/oder Qualitätsparametern (37, 40) der landwirtschaftlichen Arbeitsmaschine (1) eingerichtet ist, die einen Ernteprozess beeinflussen, sowie mindestens einer Anzeigeeinrichtung (22) zur Darstellung von Sollwerten und Istwerten der Arbeitsund/oder Qualitätsparameter (37, 40), und wobei das hinterlegte Kennlinienfeld (48) von Kennlinien (49) gebildet wird und die Kennlinien (49) in Abhängigkeit von Einflussgrößen (50) verschiedene Bewertungsgrößen (51) der landwirtschaftlichen Arbeitsmaschine (1) beschreiben, wobei die Bewertungsgrößen (51) von Qualitätsparametern (40) und die Einflussgrößen (50) von Arbeitsparametern (37) gebildet werden und das Kennlinienfeld (48) in einem aktiven Arbeitsbereich (53) liegende Betriebspunkte (52) und in den Randbereichen und/oder außerhalb des aktiven Arbeitsbereiches (53) liegende Messpunkte (54) umfasst,
**dadurch gekennzeichnet, dass**
die Steuer- und Regeleinrichtung (23) im Ernteprozess die Betriebspunkte (52) ermittelt und in das jeweilige Kennlinienfeld (48) übernimmt, wobei der die Betriebspunkte (52) umfassende Bereich des jeweiligen Kennlinienfeldes (48) den aktiven Arbeitsbereich (53) des Kennlinienfeldes (48) bildet und
die Steuer- und Regeleinrichtung (23) weiter eingerichtet ist, definiert Messpunkte (54) in den hinterlegten Kennlinienfeldern (48) anzusteuern, wobei diese gezielt angesteuerten Messpunkte (54) in den Randbereichen des Kennlinienfeldes (48) und/oder außerhalb des aktiven Arbeitsbereiches (52, 53) des jeweiligen Kennlinienfeldes (48) liegen.

2. Landwirtschaftliche Arbeitsmaschine nach Anspruch 1,
**dadurch gekennzeichnet, dass**
bei einer Aktivierung der gezielten Ansteuerung eines definierten Messpunktes (54) an die Stelle der Anzeige des Sollwertes und/oder Istwertes des jeweiligen Arbeits- und/oder Qualitätsparameters (37, 40) zumindest ein die automatisierte Einstellung und Überwachung dieses Arbeits- und/oder Qualitätsparameters (37, 40) visualisierendes charakteristisches Symbol (58) tritt.

3. Landwirtschaftliche Arbeitsmaschine nach Anspruch 2,
**dadurch gekennzeichnet, dass**
die Anzahl der gezielt ansteuerbaren Messpunkte (54) je Kennlinienfeld (48) beschränkt ist und vorzugsweise vier beträgt.

4. Landwirtschaftliche Arbeitsmaschine nach einem der Ansprüche 2 und 3,
**dadurch gekennzeichnet, dass**
die ansteuerbaren Messpunkte (54) in einem definierten Zeitintervall wiederholt angesteuert werden, wobei die Dauer des Zeitintervalls mit zunehmender Einsatzzeit der landwirtschaftlichen Arbeitsmaschine (1) zunimmt.

5. Landwirtschaftliche Arbeitsmaschine nach Anspruch 4,
**dadurch gekennzeichnet, dass**
das Zeitintervall zu Beginn der Einsatzzeit kleiner als 15 Minuten ist und sich mit zunehmender Einsatzzeit auf 30 Minuten erhöht.

6. Landwirtschaftliche Arbeitsmaschine nach einem der vorhergehenden Ansprüche,
**dadurch gekennzeichnet, dass**
das charakteristische Symbol (58) die Anzeige des Arbeits- und/oder Qualitätsparameters (37, 40) zumindest partiell überblendet und der jeweils zumindest partiell überblendete Arbeits- und/oder Qualitätsparameter (37, 40) passiv, vorzugsweise verblassend, visualisiert wird.

7. Landwirtschaftliche Arbeitsmaschine nach Anspruch 6,
**dadurch gekennzeichnet, dass**
bei einer Übersteuerung durch den Bediener (24) während des gezielten Anfahrens von Messpunkten (54) die charakteristischen Symbole (58) ausgeblendet werden.

8. Landwirtschaftliche Arbeitsmaschine nach Anspruch 7,
**dadurch gekennzeichnet, dass**
bei inaktiver automatisierter Einstellung und Überwachung von Parametern (37, 40) ein darauf gerichteter Hinweis auf der Anzeigeeinrichtung (22) einblendbar ist.

9. Landwirtschaftliche Arbeitsmaschine nach einem der vorhergehenden Ansprüche,
**dadurch gekennzeichnet, dass**
die Arbeitsparameter (37) Maschinenparametereinstellungen (38b) und Erntegutparameter umfassen können.

10. Landwirtschaftliche Arbeitsmaschine nach einem der Ansprüche 1 bis 9,
**dadurch gekennzeichnet, dass**
die Qualitätsparameter (40) die Parameter "Abscheideverlust" (42), "Reinigungsverlust" (43), "Überkehr" (41), "Überkehrvolumen" (41a) und "Kornanteil in der Überkehr" (41b) umfassen.

11. Landwirtschaftliche Arbeitsmaschine nach einem der vorhergehenden Ansprüche,
**dadurch gekennzeichnet, dass**
zumindest die die Qualitätsparameter (40) beschreibenden Kennlinienfelder (48) in Einstellautomaten (45) hinterlegt sind und wobei jeder Einstellautomat (48) in der Anzeigeeinheit (22) mittels Piktogramm (59) visualisiert ist und die Aktivierung eines Einstellautomaten (45) durch Hervorhebung des jeweiligen Piktogramms (59) und die Deaktivierung des jeweiligen Einstellautomaten (45) durch Abblendung des jeweiligen Piktogramms (59) visualisiert wird.

12. Landwirtschaftliche Arbeitsmaschine nach einem der vorhergehenden Ansprüche,
**dadurch gekennzeichnet, dass**
die Steuer- und Regeleinrichtung (23) automatisch mit der Inbetriebnahme der Arbeitsmaschine (1) aktivierbar ist.
